# EUROPÄISCHE PATENTSCHRIFT

(11) **EP 1 345 948 B1**
(45) Veröffentlichungstag und Bekanntmachung des Hinweises auf die Patenterteilung: **13.10.2004**
(21) Anmeldenummer: 01995707.5
(22) Anmeldetag: 20.12.2001
(51) Int. Cl.: C07F 5/06, C07F 5/02, C09K 11/06, H05B 33/14, H01L 51/20, C08G 61/00

(54) **BOR- ODER ALUMINIUM-SPIROVERBINDUNGEN, DEREN VERWENDUNG IN ELEKRONIKINDUSTRIE**
SPIRO COMPOUNDS BASED ON BORON OR ALUMINIUM AND THE USE OF THE SAME IN THE ELECTRONICS INDUSTRY
COMPOSES SPIRO A BASE DE BORE ET D'ALUMINIUM ET LEUR UTILISATION DANS L'INDUSTRIE ELECTRONIQUE

(30) Priorität: 22.12.2000 EP 00128292
(43) Veröffentlichungstag der Anmeldung: 24.09.2003
(73) Patentinhaber: Covion Organic Semiconductors GmbH, 65926 Frankfurt (DE)
(72) Erfinder: STÖSSEL, Philipp, 65929 Frankfurt (DE); SPREITZER, Hubert, 68519 Viernheim (DE); BECKER, Heinrich, 61479 Glashütten (DE); DROTT, Jacqueline, 64560 Riedstadt (DE)
(74) Vertreter: Luderschmidt, Schüler & Partner
(86) Internationale Anmeldenummer: PCT/EP2001/015177
(87) Internationale Veröffentlichungsnummer: WO 2002/051850

(56) Entgegenhaltungen:
- DE-A- 4 436 773
- NODA, T. ET AL.: "a blue-emitting organic electroluminescent device using a novel emitting amorphous molecular material, 5,5'-bis(dimesitylboryl)-2,2'-bithiophene" ADVANCED MATERIALS, Bd. 11, Nr. 4, 1999, Seiten 283-285, XP002165568 in der Anmeldung erwähnt

## Beschreibung

Die vorliegende Erfindung betrifft substituierte Bor- oder Aluminium-Spiroverbindungen sowie deren Verwendung in der Elektronikindustrie

In einer Reihe von verschiedenartigen Anwendungen, die im weitesten Sinne der Elektronikindustrie zugerechnet werden können, ist der Einsatz organischer Verbindungen als Wirkkomponenten (= Funktionsmaterialien) seit geraumer Zeit Realität bzw. wird in naher Zukunft erwartet.
So finden schon seit etlichen Jahren Ladungstransportmaterialien auf organischer Basis (i. d. R. Lochtransporter auf Triarylaminbasis) Verwendung in Kopiergeräten. Die Verwendung spezieller halbleitender organischer Verbindungen, die zum Teil auch zur Emission von Licht im sichtbaren Spektralbereich befähigt sind, steht gerade am Anfang der Markteinführung, zum Beispiel in Organischen-Elektrolumineszenz-Vorrichtungen.
Die Verwendung organischer Ladungstransportschichten in Anwendungen wie Organischen-Integrierten-Schaltungen (Organischen ICs) und Organischen-Solarzellen ist zumindest im Forschungsstadium schon sehr weit gediehen, so daß eine Markteinführung innerhalb der nächsten Jahre erwartet werden kann.
Die Anzahl weiterer Möglichkeiten ist sehr groß, häufig jedoch nur als Abwandlung der oben aufgeführten Prozesse zu sehen, wie die Beispiele Organische-Feststofflaserdioden und Organische-Photodetektoren belegen.
Bei einigen dieser modernen Anwendungen ist die Entwicklung teilweise bereits sehr weit fortgeschritten, dennoch besteht - je nach Applikation - immer noch ein immenser Bedarf an technischen Verbesserungen.

Bei den Organischen-Elektrolumineszenz-Vorrichtungen bzw. deren Einzelbauteilen, den Organischen-Lichtemittierenden-Dioden (OLEDs) ist die Markteinführung bereits erfolgt, wie die im Markt erhältlichen Auto-Radios mit "Organischem Display" der Firma Pioneer belegen. Weitere derartige Produkte stehen kurz vor der Einführung. Trotzallem sind hier noch deutliche Verbesserungen nötig um diese Displays zu einer echten Konkurrenz zu den derzeit marktbeherrschenden Flüssigkristallanzeigen (LCD) zu machen bzw. diese zu überflügeln.
Eine Entwicklung hierzu, die sich in den letzten beiden Jahren abzeichnet, ist der Einsatz von metallorganischen Komplexen, die Phosphoreszenz statt Fluoreszenz zeigen [M. A. Baldo, D. F. O'Brian, Y. You, A. Shoustikov, S. Sibley, M. E. Thompson, S. R. Forrest, Nature, **1998**, *395*, 151-154; M. A. Baldo, S. Lamansky, P. E. Burrows, M. E. Thompson, S. R. Forrest, Applied Physics Letters, **1999**, 75, 4-6], und die dadurch, aus theoretisch-statistischen Gründen, eine drei bis vierfache Energie- und Leistungseffizienz ergeben können. Ob sich diese neue Entwicklung durchsetzten wird, hängt allerdings stark davon ab, ob entsprechende Device-Kompositionen gefunden werden können, die diese Vorteile (Triplett-Emission = Phosphoreszenz gegenüber Singulett-Emission = Fluoreszenz) auch in den OLEDs umsetzen können. Hierzu zählen z. B. eine hohe operative Lebensdauer, eine hohe Stabilität gegenüber Temperaturbelastung, eine niedrige Einsatz- und Betriebsspannung, um mobile Applikationen zu ermöglichen, um nur einige zu nennen.

Der allgemeine Aufbau von Organischen Elektrolumineszenzvorrichtungen ist beispielsweise in US 4,539,507 und US 5,151,629 beschrieben.

Üblicherweise besteht eine organische Elektrolumineszenzvorrichtung aus mehreren Schichten, die vorzugsweise mittels Vakuummethoden aufeinander aufgebracht werden. Diese Schichten sind im einzelnen eine:
1. Trägerplatte = Substrat (üblicherweise Glas oder Kunststoffolien).
2. Transparente Anode (üblicherweise Indium-Zinn-Oxid, ITO).
3. Lochinjektions-Schicht (**H**ole **I**njection **L**ayer = HIL): z. B. auf Basis von Kupferphthalocyanin (CuPc), leitfähige Polymere, wie Polyanilin (PANI), oder Polythiophen-Derivate (wie PEDOT).
4. Lochtransport-Schicht (**H**ole **T**ransport **L**ayer = HTL): üblicherweise auf Basis von Triarylamin-Derivaten.
5. Emissions-Schicht (**Em**ission **L**ayer = EML): diese Schicht kann teilweise mit den Schichten 4 oder 6 zusammenfallen, besteht aber üblicherweise aus mit Fluoreszenzfarbstoffen bzw. Phosphoreszenzfarbstoffen dotierten Wirtsmolekülen.
6. Elektronentransport-Schicht (**E**lectron **T**ransport **L**ayer = ETL): größtenteils auf Basis von Aluminium-tris-8-hydroxy-chinoxalinat (AlQ₃).
7. Elektroneninjektions-Schicht (**E**lectron **I**njection **L**ayer = EIL): diese Schicht kann teilweise mit der Schicht 6 zusammenfallen bzw. es wird ein kleiner Teil der Kathode speziell behandelt bzw. speziell abgeschieden.
8. Kathode: hier werden in der Regel Metalle, Metallkombinationen oder Metalllegierungen mit niedriger Austrittsfunktion verwendet so z. B. Ca, Ba, Mg, Al, In, Mg/Ag.

Diese ganze Vorrichtung wird natürlich entsprechend (je nach Anwendung) strukturiert, kontaktiert und schließlich auch hermetisch eingesiegelt, da sich i. d. R. die Lebensdauer derartiger Vorrichtungen bei Anwesenheit von Wasser und/oder Luft drastisch verringert.

Beim Anlegen einer entsprechenden Spannung werden von der Anode aus Löcher, von der Kathode aus Elektronen in die Vorrichtung injiziert, die sich im Device treffen und einen angeregten Zustand erzeugen. Dieser kann, unter Aussendung von Licht, zerfallen. Dieses Licht wird durch die transparente Anode ausgestrahlt. In einigen Anwendungen kann es auch sinnvoll sein, die Anordnung genau umzudrehen, d. h. eine (semi-)transparente Kathode zu benutzen, wenn die Anode z. B. auf einem intransparenten Substrat (beispielsweise einem Schaft-Chip aus Silizium) aufgebracht ist.
Für die neuartigen Phosphoreszenz-OLED Vorrichtungen kann es auch noch vorteilhaft sein, weitere dünne Schichten, die einzelne Ladungsträger blockieren (z. B. Lochblockierungsschichten = **H**ole **B**locking **L**ayer = HBL), einzufügen.
In jedem Fall wird die einzelne OLED Licht aussenden, welches eine Farbe aufweist, die die EML vorgibt. Auf diese Weise ist es möglich, je nach EML, die drei Grundfarben (blau, grün, rot) zu erzeugen.
Durch geeignete Kombination verschiedener einzelner OLEDs ist es nun möglich verschiedenartige Vorrichtungen, angefangen von einzelnen Leuchtdioden, über einfache segmentierte Anzeigen, über aufwendigere Matrix-Displays bis hin zu vollfarbigen, großformatigen Anzeigen/Bildschirmen zu produzieren.

Bei der oben erläuterten OLED Vorrichtung wurden bzw. werden die oben genannten Funktionsmaterialien intensiv optimiert.
Es fällt jedoch auf, daß in allen Vorrichtungen als ETL praktisch ausschließlich AlQ₃ Verwendung findet. Diese Verbindung wird auch, wie oben erwähnt, vielfach gleich noch als Wirt-Material für die EML verwendet. Es wurde zwar schon vielfach versucht, diese Verbindung durch andere Substanzen zu ersetzen, dies ist aber bis dato nicht geglückt.
AIQ₃ stellte sich bis lang immer noch als der beste Kompromiß für die verschiedenartigen Anforderungen dar. So weist die Verbindung neben einer hohen thermischen Stabilität (Glastemperatur T_{g} ∼ 180°C), eine offensichtlich brauchbare Bandlage und eine vertretbare Fluoreszenz-Quanteneffizienz im Feststoff (ca. 40%) auf. Negativ ist jedoch die Eigenfarbe (Absorption: gelb) der Verbindung, die gerade bei blauen OLEDs durch Fluoreszenzabsorption und Reemission zu Farbverschiebungen führen kann. Dies ist erst recht nachteilig bei dem oben erwähnten Device Aufbau, bei dem das Licht durch die Kathode, d. h. auch durch die ETL, ausgesendet wird. Hier sind blaue OLEDs nur mit starken Effizienz- bzw. Farborteinbußen darstellbar.
Auch die Verwendbarkeit von AlQ₃ in den neuartigen phosphoreszierenden OLEDs ist noch keineswegs abschließend geklärt.
Weiterer Nachteil des Einsatzes von AlQ₃ ist die inzwischen literaturbekannte Instabilität gegenüber Löchern [vgl. z. B. Z. Popovic et al., Proceedings of SPIE, **1999**, *3797*, 310-315], was bei einem langzeitigen Einsatz immer zu Problemen im Device führen kann.
Ein entscheidender praktischer Nachteil von AlQ₃ ist die starke Hygroskopie dieser Verbindung. AlQ₃, welches unter normalen Bedingungen synthetisiert und aufbewahrt wird, enthält neben den Hydroxychinolin-Liganden immer noch ein Molekül Wasser pro Komplex-Molekül [vgl. z. B.: H. Schmidbaur et al., Z. Naturforsch. **1991**, *46b*, 901-911]. Dieses ist extrem schwer zu entfernen. Für die Verwendung in OLEDs muß AlQ₃ deshalb in komplizierten, mehrstufigen, Sublimations-Verfahren aufwendig gereinigt, und im Anschluß daran unter Wasserausschluß in einer Schutzgasatmosphäre und gelagert und gehandhabt werden. Weiterhin wurden große Schwankungen in der Qualität einzelner AlQ₃ Chargen, sowie eine schlechte Lagerstabilität festgestellt (S. Karg, E-MRS Konferenz 30.5.00-2.6.00 Straßburg)

Es bestand daher ein Bedarf an alternativen Verbindungen, die einerseits das Anforderungsprofil von AlQ₃ aufweisen und andererseits eine einfachere Handhabung ermöglichen.

Es wurde nun überraschend gefunden, daß gewisse Bor- oder Aluminiumverbindungen hervorragende Eigenschaften bei der Verwendung als ETL, als HBL, bzw. als Wirtsmaterial in der EML aufzeigen. Gerade die Verwendung in den neuartigen Phosphoreszenz-OLED Vorrichtungen ist sehr vorteilhaft.
Diese Verbindungen sind Gegenstand der vorliegenden Erfindung. Die Verbindungen zeichnen sich, v. a. gegenüber AlQ₃ durch folgende Eigenschaften aus:
1. Sie sind farblos, bzw. nahezu farblos; dies bedeutet, daß ihre UV/VIS-Absorption im Wellenlängenbereich zwischen 400 und 700 nm vernachlässigbar gering ist. Dies hat den Vorteil, daß Sie vor allem bei blauen OLEDs zu keiner Farbverschiebung bzw. Effizienzerniedrigung führen. Ein weiterer Vorteil ist natürlich ihre Verwendung als Wirts- oder ETL-Material gerade in invertierten (vgl. oben) Device-Geometrien.
2. Die erfindungsgemäßen Bor- oder Aluminiumverbindungen - eingesetzt als ETL-Material in Elektroluminiszenz-Vorrichtungen - führen in diesen zu hohen Effizienzen, die inbesondere unabhängig von den verwendeten Stromdichten sind. Damit werden auch bei hohen Stromdichten sehr gute Effizienen ermöglicht.
3. Die erfindungsgemäßen Bor- oder Aluminiumverbindungen zeichnen sich durch eine - verglichen mit AlQ₃-deutlich höhere Oxidationsstabilität aus. Dies kann bei Verwendung in entsprechenden Vorrichtungen zu einer deutlichen Erhöhung der operativen Lebensdauer führen.
4. Die erfindungsgemäßen Bor- oder Aluminiumverbindungen weisen keine erkennbare Hygroskopie auf. Lagerung für mehrere Tage bzw. Wochen unter Zutritt von Luft und Wasserdampf führt zu keinen Veränderungen der Substanzen. Die Anlagerung von Wasser an die Verbindungen kann nicht nachgewiesen werden. Dies hat natürlich den Vorteil, daß die Substanzen unter einfacheren Bedingungen gereinigt, transportiert, gelagert und für den Einsatz vorbereitet werden können. Das Verwenden muß - im Gegensatz zu den Operationen beim AlQ₃ - nicht durchgehend unter Schutzgas stattfinden.
5. Die erfindungsgemäßen Bor- oder Aluminiumverbindungen sind gut reproduizerbar in verlässlicher hoher Reinheit herstellbar und weisen keine Chargenschwankung auf.
6. Die erfindungsgemäßen Bor- oder Aluminiumverbindungen zeichnen sich auch durch eine hohe Temperaturstabilität aus, die im Einzelfall die von AlQ₃ noch übertreffen kann. Dies sei hier jedoch nicht als entscheidender Vorteil dargestellt, es soll lediglich darauf hingewiesen werden, daß auch diese Eigenschaft durch die Borane oder Aluminiumorganyle sehr zufriedenstellend erzielt wird.
7. Die erfindungsgemäßen Bor- oder Aluminiumverbindungen weisen eine exzellente Löslichkeit in organischen Lösungsmitteln auf. Damit sind diese Materialien auch aus Lösung durch Beschichtungs- oder Drucktechniken verarbeitbar. Auch bei der üblichen Verarbeitung durch Verdampfen ist diese Eigenschaft von Vorteil, da so das Reinigung der Anlagen bzw. der eingesetzten Schattenmasken erheblich erleichtert wird.

Die Verwendung Bor-haltiger Verbindungen in OLED Vorrichtungen ist bisher nur vereinzelt beschrieben. Lediglich Y. Shirota (z. B. Y. Shirota et al., Adv. Mater. **1999**, *11*, 283) beschreibt eine Bis-thiophen-bis-boranverbindung in OLEDs. Hier wird aber u. a. auf eine Exciplex-Bildung mit Lochtransportschichten hingewiesen, was auf eine morphologische Instabilität hindeutet.

Die erfindungsgemäßen Bor- oder Aluminiumverbindungen zeichnen sich jedoch durch großen sterischen Anspruch, und somit der Unterdrückung der Exciplex-Bildung und gleichzeitig der Bildung von sehr stabilen organischen Gläsern aus.

Um als Elektrolumineszenzmaterialien Verwendung zu finden, werden die Bor- oder Aluminiumverbindungen, im allgemeinen nach bekannten, dem Fachmann geläufigen Methoden, wie Vakuumverdampfung, oder auch aus Lösung durch Spincoaten oder mit verschiedenen Druckverfahren (z. B. Tintenstrahldrucken, offset-Drucken, etc.), in Form eines Films auf ein Substrat aufgebracht.

Neben der Verwendung der erfindungsgemäßen Borane oder Aluminiumverbindungen in OLED Vorrichtungen sind diese Verbindungen sehr breit in der Elektronik anwendbar. So können die erfindungsgemäßen Verbindungen in folgenden Vorrichtungen Verwendung finden:
1. Verwendung in Photokopierern als Elektronentransportschicht.
2. Verwendung in Organischen-Solarzellen als Elektronenakzeptor- bzw.-transportmaterial.
3. Verwendung in Organischen ICs als Ladungstransportschicht.
4. Verwendung in weiteren - oben zum Teil genannten - Applikationen, wie Organischen-Feststofflasern oder Organischen-Photodetektoren.

Gegenstand der Erfindung sind daher substituierte Bor-oder Aluminium-Spiroverbindungen der allgemeinen Formel (I), 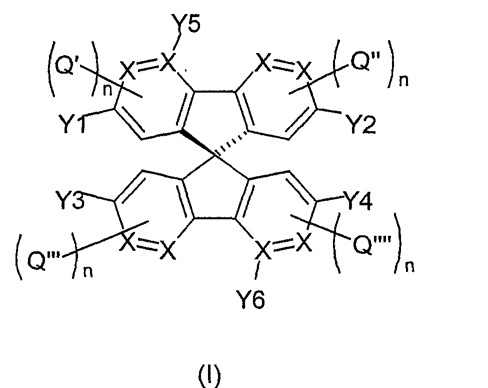 wobei die Symbole und Indizes folgende Bedeutungen haben:
- Q', Q", Q''', Q"": ist jeweils gleich oder verschieden bei jedem Auftreten und steht für CN, F, Cl oder eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -CO-, -COO-, -O-CO-, -NR¹, -(NR²R³)⁺-A⁻, oder -CONR⁴- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste Q' substituiert sein kann;
- A⁻: ein einfach geladenes Anion oder dessen Äquivalent;
- R¹,R²,R³,R⁴: sind jeweils gleich oder verschieden, H oder ein aliphatischer oder aromatischer Kohlenwasserstoffrest mit 1 bis 20 C-Atomen;
- n: gleich oder verschieden 0, 1, 2, 3;
- X: -CH- oder N;
- Y1 bis Y6:: mindestens zwei gleiche oder verschiedene Substituenten der Formel (II) und gleichzeitig die nicht durch Formel (II) belegten Positionen des Aromaten gleichen oder verschiedenen Substituenten Q' oder H entsprechen, und die Formel (II) 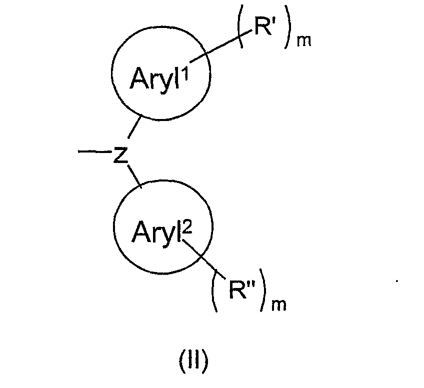
bedeutet, wobei
- Aryl¹, Aryl²: ist, gleich oder verschieden bei jedem Auftreten Phenyl, 1- bzw. 2-Naphthyl, 1-, 2- bzw. 9-Anthracenyl, 2-, 3- bzw. 4-Pyridinyl, 2-, 4- bzw. 5-Pyrimidinyl, 2-Pyrazinyl, 3- bzw. 4-Pyridazinyl, 2-, 3-, 4-, 5-, 6-, 7-bzw. 8-Chinolinyl, 2- bzw. 3-Thiophenyl, 2- bzw. 3-Pyrrolyl, 2- bzw. 3-Furanyl und 2-(1,3,4-Oxadiazol)yl;
- R', R'': ist, jeweils gleich oder verschieden bei jedem Auftreten, CN, F, Cl oder eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -CO-, -COO-, -O-CO-, -NR¹-, -(NR²R³)⁺A⁻, oder -CONR⁴- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R' substituiert sein kann;
- A⁻: ein einfach geladenes Anion oder dessen Äquivalent;
- R¹,R²,R³,R⁴: sind jeweils gleich oder verschieden, H oder ein aliphatischer oder aromatischer Kohlenwasserstoffrest mit 1 bis 20 C-Atomen;
- m: gleich oder verschieden 0, 1, 2, 3, 4, 5;
- Z: Bor oder Aluminium.

Die erfindungsgemäßen Bor- oder Aluminium-Spiroverbindungen eignen sich in hervorragender Weise zur Verwendung als Elektronentransportschichten in Elektrolumineszenzbauteilen sowie als Photoleiter in elektrooptischen Bauteilen. Weiterhin eignen sie sich hervorragend als Elektrolumineszenzmaterialien. Ebenso können sie als Wirts-Materialien mit einer Vielzahl an Dotierstoffen eingesetzt werden. Hierzu eignen sich sowohl Farbstoffe als auch Triplet-Emitter. Die erfindungsgemäßen Verbindungen zeigen in diesen Anwendungen beispielsweise den Vorteil, daß sie im Dauerbetrieb auch bei erhöhten Temperaturen (z.B. mehrstündiges Erhitzen auf 130°C) eine konstante Helligkeit aufweisen. Weiterhin bleibt die für eine gegebene Helligkeit aufzuwendende Spannung weitgehend konstant. Somit ist es nicht notwendig, bei Dauerbetrieb die Spannung nachzuregulieren, um eine anfängliche Helligkeit zu erhalten. Dieser Vorteil macht sich insbesondere bei Batteriebetrieb bemerkbar, da hierbei die unter wirtschaftlichen Aspekten mögliche Höchstspannung stark eingeschränkt ist. Ebenso weisen Vorrichtungen, welche die erfindungsgemäßen Bor- oder Aluminium-Spiro-Verbindungen enthalten, eine lange Lebensdauer sowie eine hohe EL Effizienz auf.

Bevorzugt sind Bor- oder Aluminium-Spiro-Verbindungen mit carbocyclischen Spirogrundgerüst, in denen X = -CH- ist, wie dies in Formel (III) dargestellt ist, 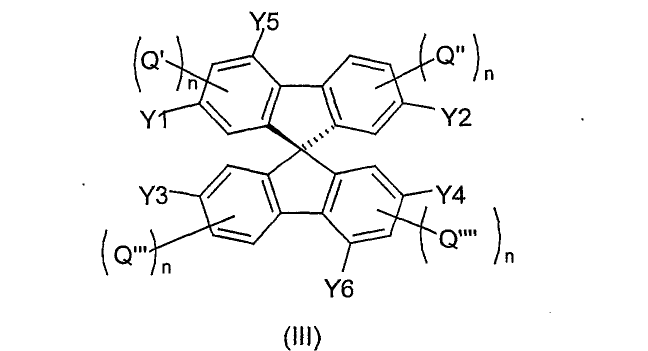 wobei die restlichen Symbole und Indizes die unter Formel (I) genannte Bedeutung haben.

Besonders bevorzugt sind Bor- oder Aluminium-Spiro-Verbindungen mit carbocyclischen Spirogrundgerüst gemäß Formel (III), in denen die Arylsubstituenten Aryl¹, Aryl² in den Substituenten Y1 bis Y6 Phenyl, 1-Naphthyl, 2-Naphthyl oder 9-Anthracenyl sind.

Die Stabilität, inbesondere gegen Oxidation - ist dann besonders hoch, wenn die Arylsubstituenten Aryl¹, Aryl² in der Formel (II) in ortho und ortho' Stellung Alkyl, Alkyloxy oder Aryl substituiert sind.

Besonders bevorzugt sind dabei diejenigen Verbindungen, bei denen das Symbol Z Bor entspricht.

Des weiteren bevorzugt sind die entsprechenden Verbindungen bei denen die Substituenten Y5 und Y6 Q' bzw. H entsprechen.

Dementsprechend sind ganz besonders bevorzugt Bor-Spiroverbindungen, gemäß Formel (IV), die als Subsituenten Y1 bis Y4 ortho-, ortho'-und para-substituierte Diphenylboryl-Reste tragen: 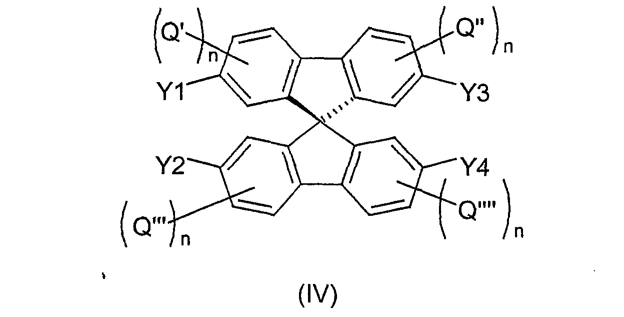 wobei die Symbole und Indizes folgende Bedeutungen haben:
- Y1 bis Y4:: mindestens zwei gleiche oder verschiedene Substituenten der Formel (V) und gleichzeitig die nicht durch Formel (V) belegten Positionen des Aromaten gleichen oder verschiedenen Substituenten Q' oder H entsprechend, und die Formel (V); 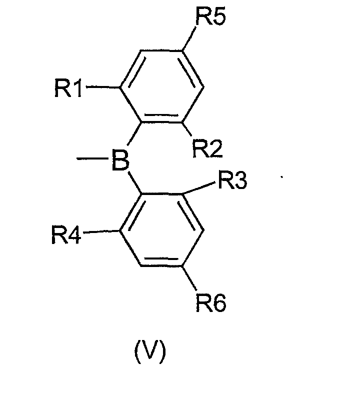
worin
- n: gleich oder verschieden 0, 1, 2 ist;
- R1,R2,R3,R4: ist gleich oder verschieden ein Alkyl, Alkyloxy oder Arylrest mit 1 bis 20 C-Atomen und;
- R5, R6: ist gleich oder verschieden H, CN, F, Cl, Br, I, eine geradkettige, verzweigte oder cyclische Alkyl- oder Alkoxygruppe, eine Thioalkyl- oder Thioarylgruppe, eine Nitrogruppe, eine Diaryl- oder Dialkylaminogruppe sowie eine Ester, Amid oder Carbonsäuregruppe, wobei die Alkyl-, Alkoxy- bzw. Arylgruppen 1 bis 20 C-Atome haben.

Die weiteren Symbole und Indizes haben die unter Formel (I) und Formel (II) genannten Bedeutungen.

Insbesondere bevorzugte Spiroverbindungen nach Formel (IV) sind durch zwei bis vier gleiche Substituenten Y1bis Y4 gekennzeichnet sind.

Hierbei haben besonders weitere Substituenten (R5, R6) mit Elektronendonor- oder Elektronenakzeptorwirkung in para-Stellung zum Bor einen deutlichen Einfluß auf die elektrischen und die elektrooptischen Eigenschaften der Spiroverbindung, so daß die elektrooptischen Eigenschaften durch eine geeignete Wahl dieser Substituenten maßgeschneidert werden können.

Spiro-Verbindungen der Formeln (I) bis (V) werden beispielsweise ausgehend von 9,9'-Spirobifluoren erhalten, dessen Synthese z.B. von G.G. Clarkson, M. Gomberg, J. Am. Chem. Soc. 52 (1930), 2881, beschrieben ist. Weiter kann die Synthese beispielsweise durch selektive Halogenierung des 9,9'-Spirobifluorens (R. Wu, J. S. Schumm, D. L. Pearson, J. M. Tour, J. Org. Chem., **1996**, *61*, 6906-6921) und anschließende Umsetzung des so erhaltenen 2,7,2',7'-Tetrabrom-9,9'spirobifluorens mit einem Metall (z.B. Li, Mg), einer Metall-Legierung (z.B. Li-Al-Legierung) oder einer Metallverbindung (*n*-, sec-, *tert*-Buthyllithium, Grignard-Verbingung) und darauf folgender salzmetathetischer Umsetzung mit einer Organo-bor-halogen- oder Organo-aluminium-halogen-verbindung erfolgen. Bewährt hat sich hierbei die Umsetzung einer lithiierten Spiro-verbindung mit Diaryl Bor- oder Aluminium-Halogeniden.

Die Darstellung unsymmetrischer Spiro-Verbindungen der Formeln (I) bis (VI) kann beispielsweise durch Umsetzung eines in 2-Position substituierten Biphenylderivats mit einem funktionalisierten Fluorenon (z.B. 2,7-Dibromfluorenon) erfolgen. Die 2'-, 7'-, 4- und 4'-Positionen können dann weiterhin durch verschiedene Reagenzien, wie zum Beispiel Halogenderivate oder Säurechloride funktionalisiert werden.

Die Synthese und Eigenschaften der oben beschriebenen, erfindungsgemäßen Bor- und Aluminiumverbindungen wird durch die nachfolgenden Beispiele erläutert, ist aber keinenfalls auf diese beschränkt.

### 1. Synthese von Bor- und Aluminium-Spiroverbindungen:

Die nachfolgenden Synthesen wurden bis zur Aufarbeitung in sorgfältig getrockneten Reaktionsgefäßen unter einer trockenen Rein-Stickstoffatmosphäre oder -Argonatmosphäre unter Verwendung sorgfältig getrockneter Lösungsmittel durchgeführt. Die verendeten Edukte wurden entweder bei ALDRICH (*n*-Butyllithium 1.6 molar in *n*-Hexan, *tert*-Butyllithium 1.7 molar in *n*-Hexan) bezogen und ohne weitere Reinigung verwendet bzw. nach Literaturvorschriften (2,7,2',7'-Tetrabrom-9,9'-spirobifluorens: R. Wu, J. S. Schumm, D. L. Pearson, J. M. Tour, J. Org. Chem., **1996**, *61*, 6906-6921, Fluor-dimesitylboran: A. Pelter, B. Singaram, L. Warren, J. W. Wilson, Tetrahedron 1993, 49, 2965-2978) hergestellt.

### Beispiel 1: Synthese von 2,7- Di-tert-butyl-2',7'-bis-(dimesitylboryl)-9,9'-spirobifluoren (S-DDMB)

Eine auf -78°C gekühlte, gut gerührte Suspension von 5.86 g (10 mmol) 2,7-Di-tert-butyl- 2',7'-dibrom-9,9'-spirobifluoren in 120 ml absolutem THF wurde während 20 min tropfenweise so mit 13.1 ml (21 mmol) einer 1.6 M Lösung von n-Butyllithium in n-Hexan versetzt, daß die Temperatur der Reaktionsmischung -65°C nicht überschritt. Die Suspension wurde 1 h bei -78°C nachgerührt und dann tropfenweise mit einer Lösung von 5.63 g (21 mmol) Fluor-dimesitylboran in 50 ml absolutem THF so während 20 min versetzt, daß die Temperatur der Reaktionsmischung -65°C nicht überschritt.
Man ließ die Reaktionsmischung unter Rühren während 12 Stunden auf Raumtemperatur erwärmen. Anschließend wurde das THF am Rotationsverdampfer entfernt, der gelbe, halbfeste Rückstand wurde in 200 ml Dichlormethan aufgenommen, die organische Phase wurde zweimal mit Wasser gewaschen und über Magnesiumsulfat getrocknet. Nach Abfiltrieren des Trockenmittels wurde die organische Phase zur Trockene eingeengt. Das gelbe Rohprodukt (ca. 8.5 - 9.0 g, Reinheit nach HPLC: 92 - 95 % ig) wurde wiederholt aus Toluol/Ethanol umkristallisiert, bis eine Reinheit von 99.8 % nach HPLC erreicht wurde. Die Ausbeute - bei einer Reinheit von 99.8% nach HPLC - betrug 5.0 - 6.0 g entsprechend 55 - 65 %.
¹H NMR (CDCl₃): [ppm] = 7.84 (d, H-4, H-5, ³J_{HH} = 7.8 Hz, 2 H), 7.55 (d, H-4', H-5', ³J_{HH} = 7.8 Hz, 2 H), 7.47 (br. d, H-3, H-6, ³J_{HH} = 7.8 Hz, 2 H), 7.29 (dd, H-3', H-6', ³J_{HH} = 7.8 Hz, ⁴J_{HH} = 1.9 Hz, 2 H), 6.93 (br. s, H-1, H-8, 2 H), 6.70 (br. s, H-1', H-8', H-Mes, 10 H), 2.22 (s, CH₃, 12 H), 1.81 (s, CH₃, 24 H), 1.14 (s, CH₃, 18 H). Thermische Daten (aus DSC): Tg - 155°C, Tₘ = 327°C.

### Beispiel 2: Synthese von 2,7,2',7'-Tetrakis-(dimesitylboryl)-9,9'-spirobifluoren(S-TDMB)

Eine auf -78°C gekühlte, gut gerührte Suspension von 6.32 g (10 mmol) 2,7, 2',7'-Tetrabrom-9,9'-spirobifluoren in 200 ml absolutem THF wurde während 20 min tropfenweise so mit 56.5 ml (96 mmol) einer 1.7 M Lösung von *tert*-Butyllithium in *n*-Hexan versetzt, daß die Temperatur der Reaktionsmischung -65°C nicht überschritt. Die Suspension wurde 1 h bei -78°C nachgerührt und dann tropfenweise mit einer Lösung von 11.80 g (48 mmol) Fluor-dimesitylboran in 100 ml absolutem THF so während 20 min versetzt, daß die Temperatur der Reaktionsmischung -65°C nicht überschritt.
Man ließ die Reaktionsmischung unter Rühren während 12 Stunden auf Raumtemperatur erwärmen. Anschließend wurde das THF am Rotationsverdampfer entfernt, der gelbe, halbfeste Rückstand wurde in 400 ml Dichlormethan aufgenommen, die organische Phase wurde zweimal mit Wasser gewaschen und über Magnesiumsulfat getrocknet. Nach Abfiltrieren des Trockenmittels wurde die organische Phase zur Trockene eingeengt. Das gelbe Rohprodukt (ca. 12.5 - 13.0 g, Reinheit nach HPLC: 92 - 95 % ig) wurde wiederholt aus Dioxan und Chloroform umkristallisiert, bis eine Reinheit von 99.9 % nach HPLC erreicht wurde. Die Ausbeute - bei einer Reinheit von 99.9% nach HPLC - betrug 9.0 - 11.0 g entsprechend 70 - 85 %.
¹H NMR (CDCl₃): [ppm] = 7.73 (d, H-4, H-4',H-5,H-5', ³J_{HH} = 7.8 Hz, 4 H), 7.45 (dd, H-3, H-3', H-6, H-6', ³J_{HH} = 7.8 Hz, ⁴J_{HH} = 1.1 Hz, 4 H), 6.96 (br. s, H-1, H-1', H-8, H-8', 4 H), 6.70 (br. s , H-Mes, 16 H), 2.26 (s, CH₃, 24 H), 1.83 (s, CH₃, 48 H). Thermische Daten (aus DSC): T_{g} ∼ 210°C, Tₘ = 387°C.

### 2. Herstellung und Charakterisierung von Organischen Elektroluminszenz-Vorrichtungen, die erfindungsgemäße Verbindungen enthalten.

Die Herstellung von LEDs erfolgte nach dem im folgenden skizzierten allgemeinen Verfahren. Dieses mußte natürlich im Einzelfall auf die jeweiligen Gegebenheiten (z. B. Schichtdickenvariation um optimale Effizienz bzw. Farbe zu erreichen) angepaßt werden.

### Allgemeines Verfahren zur Herstellung von OLEDs:

Nachdem man die ITO-beschichteten Substrate (z. B. Glasträger, PET-Folie) auf die richtige Größe zugeschnitten hat, werden sie in mehreren Reinigungsschritten im Ultraschallbad gereinigt (z.B. Seifenlösung, Millipore-Wasser, Isopropanol).
Zur Trocknung werden sie mit einer N₂-Pistole abgepustet und in einem Exsikkator gelagert. Vor der Bedampfung mit den organischen Schichten werden sie mit einem Ozon-Plasma-Gerät für ca. 20 Minuten behandelt. Es kann sich empfehlen, als erste organische Schicht eine polymere Lochinjektionsschicht zu verwenden. Dies ist in der Regel ein konjugiertes, leitfähiges Polymer, wie z. B. ein Polyanilinderivat (PANI) oder eine Polythiophenderivat (z. B. PEDOT von BAYER). Diese wird dann durch Spin-Coaten (Lackschleudern) aufgebracht.
Die organischen Schichten werden der Reihe nach durch Aufdampfen in einer Hochvakuum-Anlage aufgebracht. Dabei wird die Schichtdicke der jeweiligen Schicht und die Bedampfungsrate genau über einen Schwingquarz verfolgt bzw. eingestellt. Es können auch - wie oben beschrieben - einzelne Schichten aus mehr als einer Verbindung bestehen, d. h. in der Regel ein Wirtsmaterial (host) mit einem Gastmaterial (guest) dotiert sein. Dies wird durch Co-Verdampfung aus zwei bzw. mehreren Quellen erzielt.
Auf die organischen Schichten werden noch Elektroden aufgebracht. Dies geschieht in der Regel durch thermisches Verdampfen (Balzer BA360 bzw. Pfeiffer PL S 500). Anschließend wird die durchsichtige ITO-Elektrode als Anode und die Metallelektrode (z. B. Ca, Yb, Ba-Al) als Kathode kontaktiert und die Device-Parameter bestimmt.

### Beispiel 1:

Analog dem o. g. allgemeinen Verfahren, wurde eine grün emittierende OLED mit folgendem Aufbau erzeugt:
- PEDOT: 20 nm (aus Wasser aufgeschleudert; PEDOT bezogen von BAYER AG; Poly-(3,4-ethylendioxy)-2,5-thiophen)
- MTDATA: 20 nm (aufgedampft; MTDATA bezogen von SynTec; Tris-4,4',4"-(3-methylphenyl-phenylamino)triphenylamin)
- S-TAD: 20 nm (aufgedampft; S-TAD hergestellt nach WO99/12888; 2,2',7,7'-Tetrakis(diphenylamino)-spirobifluoren)
- CBP: 40 nm (aufgedampft; CBP bezogen von ALDRICH und weiter aufgereinigt, schließlich noch zweimal sublimiert; 4,4'-Bis-(N-carbazolyl)biphenyl) dotiert mit 6%
- IrPPy: (coverdampft; IrPPy synthetisiert und gereinigt analog R. J. Watts et al., *Inorg*. *Chem*. **1991**, *30*, 1687; *fac*-Tris-(2-phenylpyridyl)-iridium(III))
- BCP: 8 nm (aufgedampft; BCP bezogen von ABCR, verwendet wie erhalten; 2,9-Dimethyl-4,7-diphenyl-1,10-phenanthrolin)
- **S-TDMB**: 10 nm (vgl. Synthesebeispiel 2)
- Yb: 150 nm als Kathode

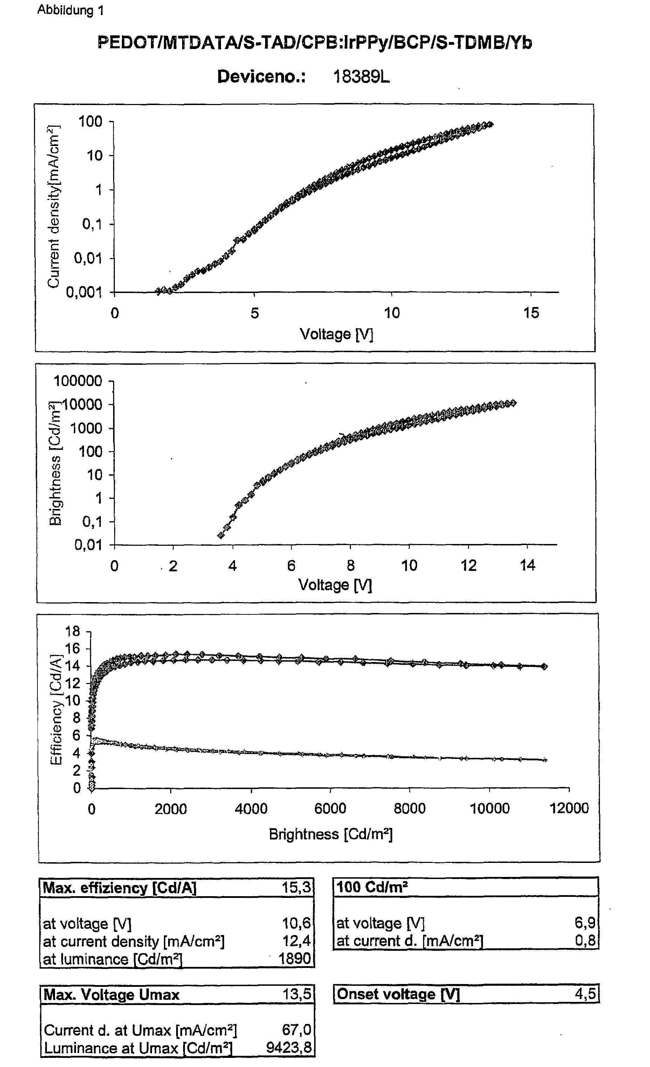

Diese OLED wurde standardmäßig charakterisiert; die wichtigsten EL-Informationen sind in Abbildung 1 wiedergegeben. Ein enormer Vorteil dieser OLED ist die extreme Flachheit der Effizienzkurve, was bedeutet, daß auch bei sehr hohen Helligkeiten (z. B. 10000 Cd/m²) immer noch sehr hohe Effizienzen erzielt werden. Dies ist v. a. für die Verwendung in Passiv-Matrix-getriebenen Displays von entscheidender Bedeutung.

### Beispiel 2:

Analog dem o. g. allgemeinen Verfahren, wurde eine blau emittierende OLED mit folgendem Aufbau erzeugt:
- PEDOT: 20 nm
- MTDATA: 20 nm
- S-TAD: 20 nm
- S-DPBVi: 30 nm (aufgedampft; synthetisiert analog H. Spreitzer et al., *Proc. SPIE* **Vol. 3797,** 316; 2,2',7,7'-Tetrakis(-2,2-diphenylvinyl)-spirobifluoren)
- **S-TDMB**: 10 nm
- Yb: 100 nm als Kathode

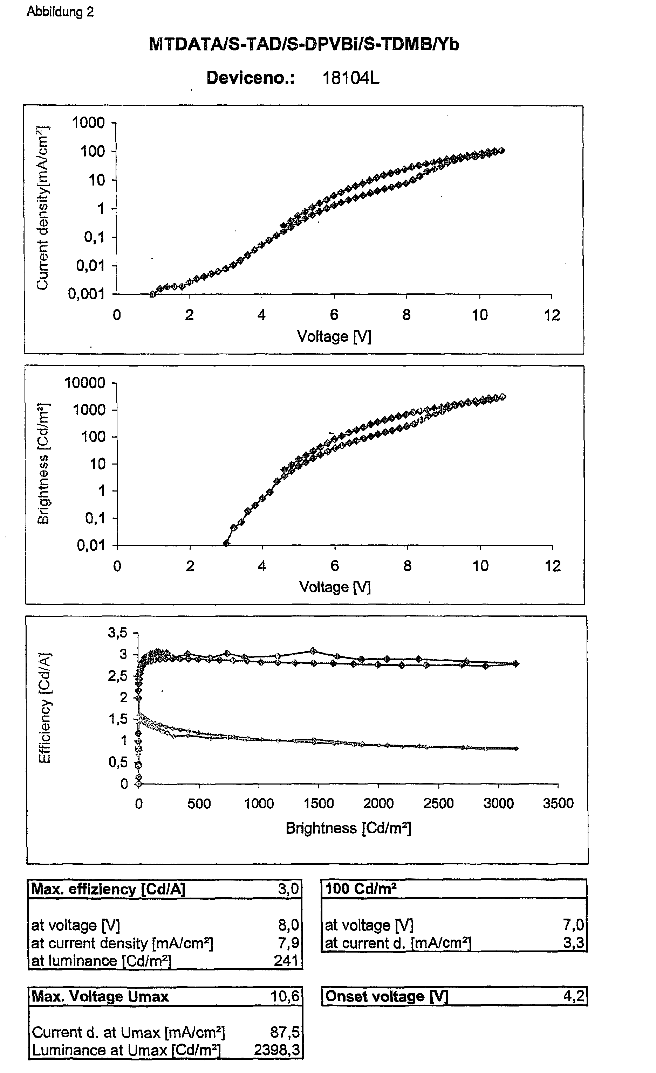

Diese OLED wurde standardmäßig charakterisiert; die wichtigsten EL-Informationen sind in Abbildung 2 wiedergegeben. Diese undotierte OLED weist äquivalente I-V-EL-Charakterisierung wie eine analoge Vorrichtung bei der **S-TDMB** durch AlQ₃ (20 nm) ersetzt wurde. Ein deutlicher Vorteil ist allerdings daß das Spektrum der Emission enger ist und somit die Farbkoordinaten Richtung blau verschoben sind (AlQ₃-OLED: x = 0.14, y = 0.16; **S-TDMB**-OLED: x = 0.12, y = 0.14). Dies hat zum einen den Vorteil bei Vollfarb-Anwendungen (d. h. die Farbe im Display wird brillianter), zum anderen bedeutet es auch, daß die Quanteneffizienz höher ist, da ja Blauverschiebung der Emission eine geringere Helligkeit bedeutet (in Candela!).

## Patentansprüche

1. Verbindungen der allgemeinen Formel (I), 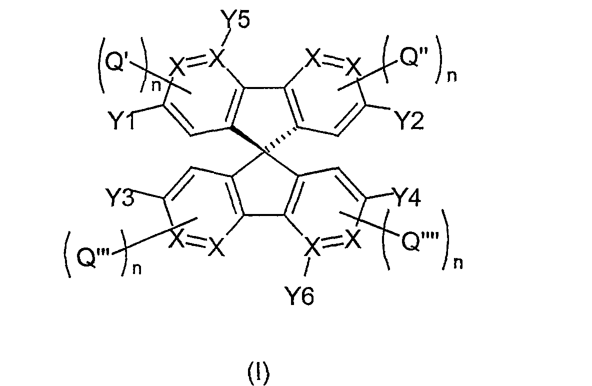 wobei die Symbole und Indizes folgende Bedeutungen haben:
Q', Q'', Q''', Q'''' ist jeweils gleich oder verschieden bei jedem Auftreten und steht für CN, F, Cl oder eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -CO-, -COO-, -O-CO-, -NR¹, -(NR²R³)⁺-A⁻, oder -CONR⁴- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste Q' substituiert sein kann;
A⁻ ist ein einfach geladenes Anion oder dessen Äquivalent;
R¹,R²,R³,R⁴ sind jeweils gleich oder verschieden, H oder ein aliphatischer oder aromatischer Kohlenwasserstoffrest mit 1 bis 20 C-Atomen;
n ist gleich oder verschieden 0, 1, 2, 3;
X ist -CH- oder N;
Y1 bis Y6: mindestens zwei gleiche oder verschiedene Substituenten der Formel (II) und gleichzeitig die nicht durch Formel (II) belegten Positionen des Aromaten gleichen oder verschiedenen Substituenten Q' oder H entsprechen, und die Formel (II) 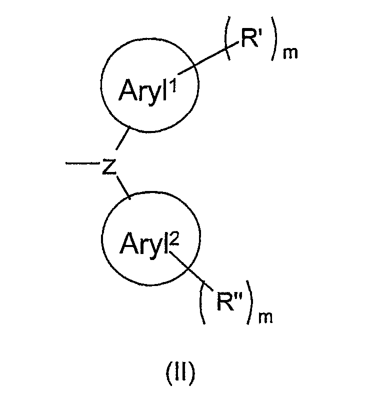
bedeutet, worin
Aryl¹, Aryl² gleich oder verschieden bei jedem Auftreten Phenyl, 1- bzw. 2-Naphthyl, 1-, 2- bzw. 9-Anthracenyl, 2-, 3- bzw. 4-Pyridinyl, 2-, 4- bzw. 5-Pyrimidinyl, 2-Pyrazinyl, 3- bzw. 4-Pyridazinyl, 2-, 3-, 4-, 5-, 6-, 7-bzw. 8-Chinolinyl, 2- bzw. 3-Thiophenyl, 2- bzw. 3-Pyrrolyl, 2- bzw. 3-Furanyl und 2-(1,3,4-Oxadiazol)yl;
R', R" gleich oder verschieden bei jedem Auftreten, CN, F, Cl oder eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -CO-, -COO-, -O-CO-, -NR¹-, -(NR²R³)⁺A⁻, oder -CONR⁴- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R' substituiert sein kann;
A⁻ ein einfach geladenes Anion oder dessen Äquivalent;
R¹,R²,R³,R⁴ sind gleich oder verschieden, H oder ein aliphatischer oder aromatischer Kohlenwasserstoffrest mit 1 bis 20 C-Atomen;
m gleich oder verschieden 0, 1, 2, 3, 4, 5;
Z Bor oder Aluminium.

2. Verbindungen gemäß Anspruch 1, **dadurch gekennzeichnet, daß** X gleich -CH- ist.

3. Verbindungen gemäß Anspruch 1 oder 2, **dadurch gekennzeichnet, daß** die Arylsubstituenten Aryl¹, Aryl² in den Substituenten Y1 bis Y6 Phenyl, 1-Naphthyl, 2-Naphthyl oder 9-Anthracenyl sind.

4. Verbindungen gemäß einem der Ansprüche 1 bis 3, **dadurch gekennzeichnet, daß** Z für Bor steht.

5. Verbindungen gemäß einem der Ansprüche 1 bis 4, **dadurch gekennzeichnet, daß** die Substituenten Y5 und Y6 für Q' und Wasserstoff stehen.

6. Verbindungen der allgemeinen Forme (IV) 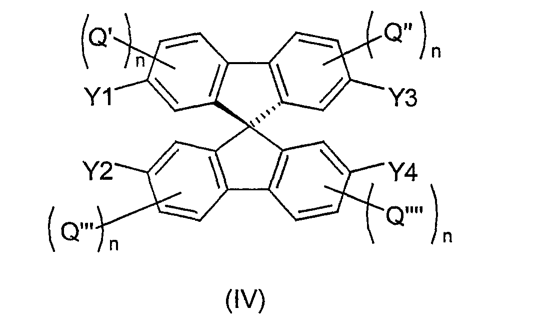 worin
Y1 bis Y4: mindestens zwei gleiche oder verschiedene Substituenten der Formel (V) bedeuten und gleichzeitig die nicht durch Formel (V) belegten Positionen am Aromaten gleichen oder verschiedenen Substituenten Q' oder Wasserstoff entsprechen, und die Formel (V) 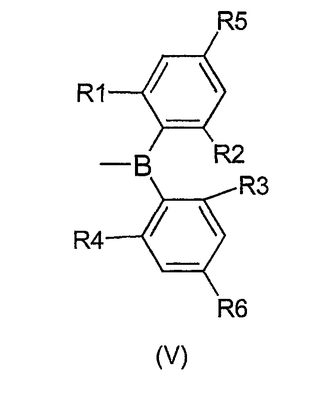
worin
n gleich oder verschieden 0, 1, 2 ist;
R1,R2,R3,R4 ist jeweils gleich oder verschieden ein Alkyl, Alkyloxy oder Arylrest mit 1 bis 20 C-Atomen ist und;
R5, R6 ist jeweils gleich oder verschieden H, CN, F, Cl, Br, I, eine geradkettige, verzweigte oder cyclische Alkyl- oder Alkoxygruppe, eine Thioalkyl- oder Thioarylgruppe, eine Nitrogruppe, eine Diaryl- oder Dialkylaminogruppe sowie eine Ester, Amid oder Carbonsäuregruppe, wobei die Alkyl-, Alkoxy- bzw. Arylgruppen 1 bis 20 C-Atome haben, bedeutet.

7. Verbindungen gemäß Anspruch 6, **dadurch gekennzeichnet, daß** zwei, drei oder vier Reste Y1 bis Y4 gleich sind.

8. Verwendung der Verbindungen gemäß einem oder mehreren der Ansprüche 1 bis 7 in organischen Elektrolumineszenz- und/oder Phosphoreszenz-Vorrichtungen.

9. Verwendung der Verbindungen gemäß einem oder mehreren der Ansprüche 1 bis 7 in Elektronentransport-Schichten (ETL), Lochblockierungs-Schichten (HBL) und/oder als Wirtsmaterial in organischen Elektrolumineszenz- und/oder Phosphoreszenz-Vorrichtungen.

10. Verwendung der Verbindungen gemäß einem oder mehreren der Ansprüche 1 bis 7 als Elektronentransportmaterial in Photokopierern.

11. Verwendung der Verbindungen gemäß einem oder mehreren der Ansprüche 1 bis 7 als Elektronenakzeptor- bzw. -transportmaterial in Solarzellen.

12. Verwendung der Verbindungen gemäß einem oder mehreren der Ansprüche 1 bis 7 als Ladungstransportmaterial in organischen ICs (Schaltungen).

13. Verwendung der Verbindungen gemäß einem oder mehreren der Ansprüche 1 bis 7 in organischen-Feststofflasern oder organischen-Photodetektoren.

## Claims

1. A compound of the general formula (I), 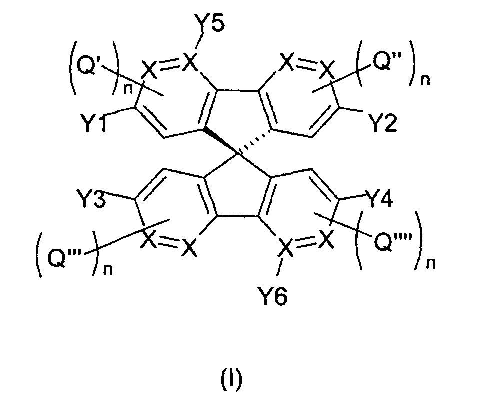 where the symbols and indices have the following meanings:
Q', Q", Q''', Q"" are identical or different on each occurrence and are each CN, F, Cl or a straight-chain or branched or cyclic alkyl or alkoxy group which has from 1 to 20 carbon atoms and in which one or more nonadjacent CH₂ groups may be replaced by -O-, -S-, -CO-, -COO-, -O-CO-, -NR¹-, -(NR²R³)⁺-A⁻ or -CONR⁴- and one or more H atoms may be replaced by F, or an aryl or heteroaryl group which has from 4 to 14 carbon atoms and may be substituted by one or more nonaromatic radicals Q';
A⁻ is a singly charged anion or its equivalent;
R¹,R²,R³,R⁴ are identical or different and are each H or an aliphatic or aromatic hydrocarbon radical having from 1 to 20 carbon atoms;
n are identical or different and are each 0, 1, 2, 3;
X is -CH- or N;
Y1 to Y6: include at least two identical or different substituents of the formula (II) and the remaining Y1 to Y6 in the positions of the aromatic which are not occupied by formula (II) are identical or different substituents Q' or H, where the formula (II) is 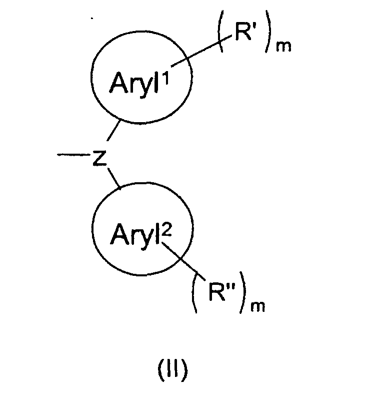
where
Aryl¹, Aryl² are identical or different on each occurrence and are each phenyl, 1- or 2-naphthyl, 1-, 2- or 9-anthracenyl, 2-, 3- or 4-pyridinyl, 2-, 4- or 5-pyrimidinyl, 2-pyrazinyl, 3- or 4-pyridazinyl, 2-, 3-, 4-, 5-, 6-, 7- or 8-quinolinyl, 2- or 3-thienyl, 2- or 3-pyrrolyl, 2- or 3-furanyl and 2-(1,3,4-oxadiazol)yl;
R', R" are identical or different on each occurrence and are each CN, F, Cl or a straight-chain or branched or cyclic alkyl or alkoxy group which has from 1 to 20 carbon atoms and in which one or more nonadjacent CH₂ groups may be replaced by -O-, -S-, -CO-, -COO-, -O-CO-, -NR¹-, -(NR²R³)⁺A⁻ or -CONR⁴- and one or more H atoms may be replaced by F, or an aryl or heteroaryl group which has from 4 to 14 carbon atoms and may be substituted by one or more nonaromatic radicals R';
A⁻ is a singly charged anion or its equivalent;
R¹,R²,R³,R⁴ are identical or different and are each H or an aliphatic or aromatic hydrocarbon radical having from 1 to 20 carbon atoms;
m are identical or different and are each 0, 1, 2, 3, 4, 5;
Z is boron or aluminum.

2. A compound as claimed in claim 1, **characterized in that** X is -CH-.

3. A compound as claimed in claim 1 or 2, **characterized in that** the aryl substituents Aryl¹, Aryl² in the substituents Y1 to Y6 are each phenyl, 1-naphthyl, 2-naphthyl or 9-anthracenyl.

4. A compound as claimed in any of claims 1 to 3, **characterized in that** Z is boron.

5. A compound as claimed in any of claims 1 to 4, **characterized in that** the substituents Y5 and Y6 are Q' and hydrogen.

6. A compound of the formula (IV) 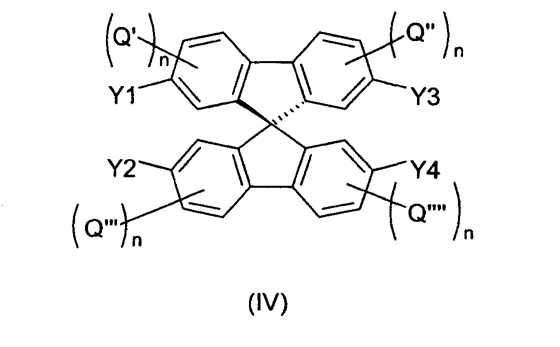 where
Y1 to Y4 include at least two identical or different substituents of the formula (V) and the remaining Y1 to Y4 in the positions of the aromatic which are not occupied by formula (V) are identical or different substituents Q' or hydrogen, where the formula (V) is 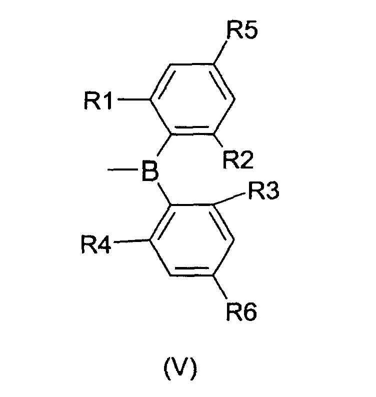
where
n are identical or different and are each 0, 1, 2;
R1,R2,R3,R4 are identical or different and are each an alkyl, alkyloxy or aryl radical having from 1 to 20 carbon atoms and
R5, R6 are identical or different and are each H, CN, F, Cl, Br, I, a straight-chain, branched or cyclic alkyl or alkoxy group, a thioalkyl or thioaryl group, a nitro group, a diarylamino or dialkylamino group or an ester, amide or carboxyl group, where the alkyl, alkoxy or aryl groups have from 1 to 20 carbon atoms.

7. A compound as claimed in claim 6, **characterized in that** two, three or four of the radicals Y1 to Y4 are identical.

8. The use of a compound as claimed in one or more of claims 1 to 7 in organic electroluminescence and/or phosphorescence devices.

9. The use of a compound as claimed in one or more of claims 1 to 7 in electron transport layers (ETLs), hole blocking layers (HBLs) and/or as host material in organic electroluminescence and/or phosphorescence devices.

10. The use of a compound as claimed in one or more of claims 1 to 7 as electron transport material in photocopiers.

11. The use of a compound as claimed in one or more of claims 1 to 7 as electron acceptor or electron transport material in solar cells.

12. The use of a compound as claimed in one or more of claims 1 to 7 as charge transport material in organic ICs (circuits).

13. The use of a compound as claimed in one or more of claims 1 to 7 in organic solid-state lasers or organic photodetectors.

## Revendications

1. Composés de formule générale (I), 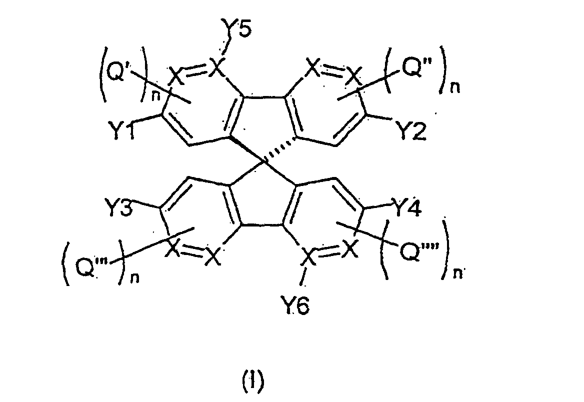 dans laquelle les symboles et indices ont les significations suivantes :
Q', Q'', Q''', Q'''' est chaque fois identique ou différent à chaque apparition et représente CN, F, Cl ou un groupe alkyle ou alcoxy linéaire ou ramifié ou cyclique, de 1 à 20 atomes de C, un ou plusieurs groupes CH₂ non voisins pouvant être remplacés par -O-, -S-, -CO-, -COO-, -O-CO-, NR¹, -(NR²R³)⁺A⁻ ou -CONR⁴- et un ou plusieurs atomes de H pouvant être remplacés par F ou un groupe aryle ou hétéroaryle avec 4 à 14 atomes de C, qui peut être substitué par un ou plusieurs radicaux non aromatiques Q' ;
A⁻ est un anion portant une charge unique ou l'équivalent de celui-ci ;
R¹, R², R³, R⁴ sont chaque fois identiques ou différents, H, ou bien un radical hydrocarboné aliphatique ou aromatique, de 1 à 20 atomes de C ;
n vaut 0, 1, 2, 3, identiques ou différents ;
X représente -CH- ou N ;
Y1 à Y6 : au moins deux substituants, identiques ou différents, de formule (II), et en même temps les positions non occupées par la formule (II) de l'aromate correspondent à des substituants identiques ou différents Q' ou H, et la formule (II) signifie 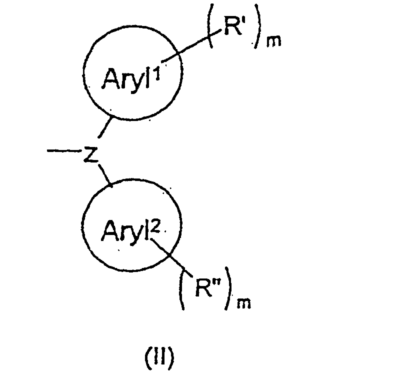 dans laquelle
Aryl¹, Aryl² sont identiques ou différents à chaque apparition, phényle, 1 ou 2-naphtyle, 1, 2 ou 9-anthracényle, 2, 3 ou 4-pyridinyle, 2, 4 ou 5-pyrimidinyle, 2-pyrazinyle, 3 ou 4-pyridazinyle, 2, 3, 4, 5, 6, 7 ou 8-chinolinyle, 2 ou 3-thiophényle, 2 ou 3-pyrrolyle, 2 ou 3-furanyle et 2-(1,3,4-oxadiazol)yle ;
R', R'' sont identiques ou différents à chaque apparition, CN, F, Cl ou un groupe alkyle ou alcoxy linéaire ou ramifié ou cyclique de 1 à 20 atomes de C, un ou plusieurs groupes CH₂ non voisins pouvant être remplacés par -O-, -S-, -CO-, -COO-, -O-CO-, NR¹, -(NR²R³)⁺A⁻ ou -CONR⁴- et un ou plusieurs atomes d'hydrogène pouvant être remplacés par un F ou un groupe aryle ou hétéroaryle de 4 à 14 atomes de C, qui peut être substitué par un ou plusieurs radicaux non aromatiques R' ;
A⁻ est un anion portant une charge unique ou l'équivalent de célui-ci ;
R¹, R², R³, R⁴ sont, identiques ou différents, H, ou bien un radical hydrocarboné aliphatique ou aromatique de 1 à 20 atomes de C ;
m vaut 0, 1, 2, 3, identiques ou différents ;
Z est le bore ou l'aluminium.

2. Composés selon la revendication 1, **caractérisés en ce que** X est -CH-.

3. Composés selon la revendication 1 ou 2, **caractérisés en ce que** les substituants aryle aryl¹, aryl² dans les substituants Y1 à Y6 représentent phényle, 1-naphtyle, 2-naphtyle ou 9-anthracényle.

4. Composés selon l'une quelconque des revendications 1 à 3, **caractérisées. en ce que** Z représente un atome de bore.

5. Composés selon l'une quelconque des revendications 1 à 4, **caractérisés en ce que** les substituants Y5 et Y6 représentent Q' et un atome d'hydrogène.

6. Composés de formule générale (IV) 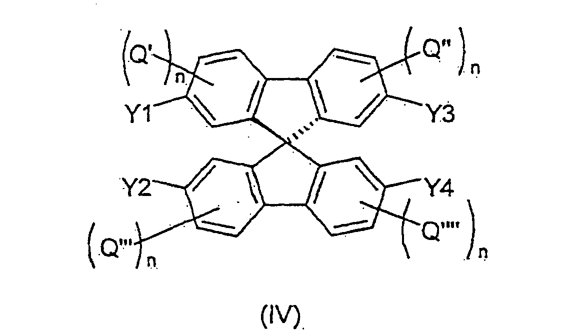 dans laquelle
Y1 à Y4 : signifient au moins deux substituants, identiques ou différents, de formule (V), et en même temps les positions non occupées par la formule (V) sur l'aromate correspondent à des substituants Q' identiques ou différents ou à un atome d'hydrogène, et la formule (V) signifie 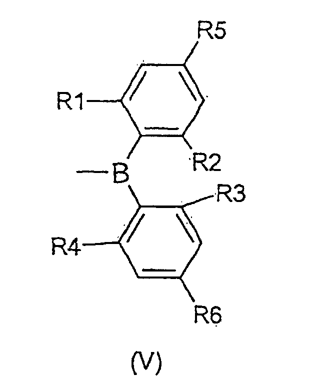 dans laquelle
n vaut 0, 1, 2, identiques ou différents ;
R1, R2, R3, R4 sont, chaque fois identiques ou différents, un radical alkyle, alkyloxy ou aryle de 1 à 20 atomes de C, et
R5, R6 sont chaque fois identiques ou différents, H, CN, F, Cl, Br, I, un groupe alkyle ou alcoxy linéaire, ramifié ou cyclique, un groupe thioalkyle ou thioaryle, un groupe nitré, un groupe amino diaryle ou dialkyle, ainsi qu'un ester, un amide ou un groupe d'acide carboxylique, les groupes alkyle, alcoxy ou aryle ayant de 1 à 20 atomes de C.

7. Composés selon la revendication 6, **caractérisé en ce que** deux, trois ou quatre radicaux Y1 à Y4 sont identiques.

8. Utilisation des composés selon l'une quelconque ou plusieurs des revendications 1 à 7 dans des dispositifs à électroluminescence et/ou à phosphorescence.

9. Utilisation des composés selon l'une quelconque ou plusieurs des revendications 1 à 7 dans des couches à transport d'électrons (ETL), des couches à blocage de trous (HBL) et/ou comme matériau hôte dans des dispositifs à électroluminescence et/ou à phosphorescence.

10. Utilisation des composés selon l'une quelconque ou plusieurs des revendications 1 à 7 comme matériau de transport d'électrons pour la photocopie.

11. Utilisation des composés selon l'une quelconque ou plusieurs des revendications 1 à 7 comme matériau accepteur d'électrons ou matériau de transport d'électrons dans les cellules solaires.

12. Utilisation des composés selon l'une quelconque ou plusieurs des revendications 1 à 7 comme matériau de transport de charges dans des circuits intégrés organiques.

13. Utilisation des composés selon l'une quelconque ou plusieurs des revendications 1 à 7 dans des lasers à solides organiques ou des photodétecteurs organiques.
